(19) Europäisches Patentamt
European Patent Office
Office européen des brevets

(11) Publication number : 0 127 408 B2

# (12) NEW EUROPEAN PATENT SPECIFICATION

(45) Date of publication of the new patent specification : 10.11.93 Bulletin 93/45

(51) Int. Cl.$^5$ : G02B 6/22

(21) Application number : 84303402.6

(22) Date of filing : 18.05.84

## (54) Optical waveguide fiber.

The file contains technical information submitted after the application was filed and not included in this specification

(30) Priority : 20.05.83 US 496560

(43) Date of publication of application : 05.12.84 Bulletin 84/49

(45) Publication of the grant of the patent : 06.12.89 Bulletin 89/49

(45) Mention of the opposition decision : 10.11.93 Bulletin 93/45

(84) Designated Contracting States : AT BE CH DE FR GB IT LI NL SE

(56) References cited :
EP-A- 0 041 864
EP-A- 0 083 843
GB-A- 2 100 464
GB-A- 2 116 744
US-A- 4 000 416
US-A- 4 149 772
US-A- 4 265 515
ELECTRONICS LETTERS, vol. 19, no. 9, 28th April 1983, pages 317-318, London, GB; V.A. BHAGAVATULA et al.: "Segmented-core single-mode fibres with low loss and low dispersion"
LASER FOCUS, vol. 19, no. 2, February 1983, page 77, Newton, Massachusetts, US; "Segmented fiber cores give low dispersion"
ELECTRONICS LETTERS, vol. 18, no. 24, 25th November 1982, pages 1023-1024, London, GB; L.G. COHEN et al.: "Low-loss quadruple-clad single-mode lightguides with dispersion below 2ps/km nm over the 1.28 mum-1.65 mum wavelength range"
ARCHIV FÜR ELEKTRONIK UND ÜBERTRAGUNGSTECHNIK, vol. 30, no. 7-8, July/August 1976, pages 329-331, Stuttgart, DE; K. BEHM: "Group delay in CVD-fabricated fibres with diffused stairlike index profiles"
APPLIED OPTICS, vol. 16, no. 2, February 1977, pages 483-493, New York, US; C. YEH et al.: "Computing the propagation characteristics of radially stratified fibers: an efficient method"

(56) References cited :
Applied Physics Letters, vol.31, no.1, july 77, fig.1
Applied Optics, vol. 19 (1980), no 12, pp 2007-2010
IEEE Journal of Quantum Electronics, vol. PE-14 (1978), no. 11, pp 855-859
Electronics Letters, vol. 14 (1978), no. 6, pp 170-172
Electronics Letters, vol. 15 (1979), no. 22, pp 729-731
Applied Optics, vol 18 (1979), no. 13, pp 2199-2206
Code of Federal Regulations (July 1979), 37, p 10
Extracts from US PTO File on USA 4149772

(73) Proprietor : Corning Glass Works
Houghton Park
Corning New York 14831 (US)

(72) Inventor : Bhagavatula, Venkata Adiseshaiah
137 Field Street Mountainbrow Apts. No.3
Corning New York (US)

(74) Representative : Boon, Graham Anthony et al
Elkington and Fife Prospect House 8
Pembroke Road
Sevenoaks, Kent TN13 1XR (GB)



Jouve, 18, rue Saint-Denis, 75001 PARIS

**Description**

The present invention relates to an optical waveguide fiber for transmitting light wave energy in a single mode.

Single-mode optical waveguide fibers have been developed that achieve transmission losses as low as 0.5 dB/km and 0.2 dB/km at wavelengths of 1300 nm and 1550 nm, respectively. Because of their low loss and because of the high bandwidths generally attributed to single-mode fibers, they are attractive as potential long distance transmission lines. However, their potentially high bandwidth can be achieved only if the design is optimized so that the total dispersion $D_t$ for the $HE_{11}$ mode is equal to zero or as near as possible to zero at the operating wavelength.

In single-mode waveguides the total dispersion is governed by the material dispersion $D_m$ and the waveguide dispersion $D_w$. For a given fiber composition the material dispersion varies as a function of wavelength. For example, the material dispersion versus wavelength curve passes through zero dispersion at a wavelength near 1280 nm for high silica content fibers. Single-mode fibers can be designed which exhibit zero total dispersion at any wavelength in a range of wavelengths above that wavelength at which the material dispersion curve passes through zero dispersion. This can be achieved by tailoring the waveguide dispersion to balance out the material dispersion at some specified wavelength which is selected because of low fiber attenuation and/or availability of light sources. The waveguide dispersion can be tailored by varying the core radius a, the core index profile or the core-cladding relative index difference Δ. The term Δ is defined by the equation

$$\Delta = (n_1^2 - n_2^2)/2n_1^2$$

where $n_1$ is the peak refractive index of the core and $n_2$ is the cladding refractive index. Techniques for tailoring the zero dispersion wavelength are taught in the article by U. C. Paek et al. entitled "Dispersionless Single-Mode Light Guides With a Index Profiles", The Bell System Technical Journal, Volume 60, No. 5, May-June 1981, pp. 583-598 and the article by L. G. Cohen entitled "Tailoring Zero Chromatic Dispersion Into The 1.5-1.6 μm Low-Loss Spectral Region of Single-Mode Fibers", Electronics Letters, Volume 15, No. 12, June 7, 1979, pp. 134-135.

Whereas the designs taught in the aforementioned Paek et al. and Cohen et al. articles can result in a tailoring of the zero dispersion wavelength, they adversely affect other parameters. To achieve lowest system loss, there must be optimization of parameters such as spot size $w_o$ and the ratio $w_o/a$, which determine splice loss and microbend loss, respectively. Also, work done on step-index single-mode waveguides having a Δ of about 0.3% indicates that such a value of Δ may be too low insofar as microbend loss is concerned. For conventional fibers having step-index or a-type core index profiles and having Δ-values greater than about 0.3%, it is difficult to meet the requirement that the zero dispersion wavelength $\lambda_o$ be quite close, i.e., within 5 nm, to the laser source wavelength wnen the source wavelength is chosen to be about 1300 nm in order to reduce the loss contribution due to OH absorption which peaks at 1380 nm.

The Paek et al. publication states that as the wavelength gets longer, the guide radius must get smaller and that at longer wavelengths a much larger amount of material dispersion must be compensated for by waveguide dispersion. This requires greater precision in the waveguide parameters than when the guide is designed to operate at the zero of material dispersion. If the waveguide radius is made too small in order to balance out material dispersion, microbending losses become unacceptably high.

The W-type waveguide disclosed in U.S. Patent No. 3,997,241 issued to S. Nishida et al. offers an additional parameter which can be varied in order to vary the waveguide dispersion. This fiber comprises a core having a uniform, relatively high refractive index $n_1$ surrounded by an inner cladding layer having a relatively low refractive index $qn_1$ and an outer cladding layer having an intermediate value of refractive index $pn_1$. Since this design results in an increase of $V_c$ to a value calculated to be 3.8327, it enables light to be propagated in a single mode through a core having a radius greater than that which would be permitted in conventional step index waveguides. The normalized frequency V is expressed by the formula:

$$V = \frac{2\pi a}{\lambda}\sqrt{n_1^2 - n_2^2}$$

The term $V_c$ designates the single-mode cutoff value of V. Also, bending losses are reduced by the Nishida design. This design can achieve a total dispersion that is zero or near zero over a broad range of wavelengths, but in order to achieve such broad band operation, the intermediate layer index $qn_1$ should be relatively low and the outer cladding index $pn_1$ should be relatively close to the core index. In accordance with the teachings of the Nishida et al. patent, the quantity (n-pn)/(n-qn) should be less than 0.1. Such a small ratio of (n-pn)/(n-qn) causes manufacturing tolerance to be critical, and slight changes in the refractive index of a layer can greatly affect the slope of the waveguide dispersion curve. As the slope of the waveguide dispersion curve varies from its design value, the width of the wavelength range at which low dispersion operation can be achieved is correspondingly reduced.

The optical fiber of the Nishida et al. patent has a lower value of normalized frequency $V_1$' below which single-mode propagation does not exist. As shown in Figure 2 of that patent, single-mode propagation occurs in that range of normalized frequenzy between $V_1$' and $V_2$'. Thus, as the index $pn_1$ of the outer cladding is increased in order to satisfy the preferred relationship for the quantity (n-pn)/(n-qn), the V-value range over which single-mode operation is practical becomes small, again making the design sensitive to manufacturing tolerances.

It is therefore an object of the present invention to provide a single-mode optical waveguide which exhibits low dispersion over a wide band of wavelengths and which is not subject to the aforementioned limitations of the prior art.

A further object of this invention is to provide a single-mode optical waveguide having a relatively large core radius and exhibiting relatively low attenuation due to microbending.

Another object is to provide a single-mode optical waveguide having minimal dispersion over a wide wavelength range without lowest order mode cutoff, or with the lowest order mode cutoff far removed from the operating region.

The optical waveguide fiber of the present invention is defined in claim 1.

In the accompanying drawings

Figure 1 shows a cross-sectional view of an optical waveguide fiber.

Figures 2, 3 and 7 through 10 are illustrative of numerous refractive index profiles.

Figure 4 is a graph of the quantity $Vd^2Vb/dV^2$ plotted as a function of the ratio $V/V_c$.

Figures 5 and 6 are dispersion v. wavelength curves for two fibers.

Figures 7 to 10 show the refractive index profiles of embodiments of this invention.

Figures 1-6 do not constitute embodiments of the invention but have been included to aid understanding of the invention.

The present invention relates to a single-mode optical waveguide fiber having a core including one or more regions of depressed refractive index.

The optical waveguide of Figure 1 comprises a core having inner and outer regions 10 and 12 separated by a single region 14 of depressed refractive index $n_3$. One of the many possible refractive index profiles is illustrated in Figure 2, wherein inner core region 19a and outer core region 19b both exhibit a refractive index $n_1$. Even though the refractive indices of these two core regions are the same, they may be formed of different compositions. The core is surrounded by cladding layer 16 of refractive index $n_2$. The cladding may have a depressed refractive index as illustrated by solid line 20 or non-depressed refractive index as illustrated by dashed line 21. Refractive index $n_3$ can be less than $n_2$ as indicated by line 22, or it can be equal to or greater than $n_2$. The effect of the index depression is to modify the light energy propagation characteristics of a fiber to provide a desired relationship between waveguide dispersion and wavelength. If the quantity $(n_1-n_2)/(n_1-n_3)$ is as small as 0.1 the aforementioned effect exists, but manufacturing tolerances become critical. Thus. given the manufacturing processes and fiber compositions employed at the present time, a small change in a physical property of a fiber could result in a large change in waveguide dispersion characteristics when $(n_1-n_2)/(n_1-n_3)$ is 0.1. When the ratio $(n_1 -n_2)/(n_1-n_3)$ is about 2.0 or greater, the beneficial effect of the design of the present invention becomes negligible. Therefore, the ratio $(n_1-n_2)/ (n_1-n_3)$ should be less than 2.0.

Whereas the core profile illustrated in Figure 2 is that of a step index waveguide, other types of core profiles including α-profiles can be employed. The term "α-profile" is used herein to mean that the refractive index of the core is defined by the equation

$$n(r) = n_o[1 - \Delta(r/a)^{\alpha}]$$

where $n_o$ is the refractive index at the fiber axis. Curve 24 of Figure 3 represents an α-profile wherein α equals 2. The refractive index of the cladding may have the same value as the edge of the core, as shown by solid line 26, or the refractive index of the cladding may be lower than that at the outer edge of the core as shown by dashed line 28.

The shape of the core index depression refractive index profile is a variable that has an effect on the propagation characteristics of the fiber. Instead of being flat as illustrated in the lower most portion 30 of the core profile in Figure 3, the index depression could be rounded or even pointed as illustrated by dashed line 32.

By controlling the radial position, depth, width and shape of the index depression, the propagation characteristics of the waveguide can be suitably modified to meet different requirements imposed on a single mode system. For example, assuming a given type of core index profile, different types of index depressions are required to obtain zero dispersion operation at different system wavelengths.

The manner in which the design of the present invention can be employed to produce optical waveguides having widely differing dispersion characteristics can be seen from the following description, reference being made to the graph of Figure 4. In that figure, the quantity $Vd^2(Vb)/dV^2$ is plotted as a function of the ratio $V/V_c$. The quantity $Vd^2(Vb)/dV^2$ is related to the waveguide dispersion $D_w$ as follows

$$D_w = -\frac{n_2\Delta}{c\lambda}\left[\frac{Vd^2(Vb)}{dV^2}\right]$$

where C is the speed of light, λ is the wavelength of light, b is the normalized propagation constant. The graph of Figure 4 enables one to compare the relative waveguide dispersions that can be obtained at different V-values for different fiber core profiles. Single mode operation takes place at values of $V/V_c$ less than 1.0. It is generally desirable to operate an optical waveguide fiber at a value of $V/V_c$ near 1.0 to minimize microbend loss. It is generally undesirable to operate a waveguide at $V/V_c$ values below 0.6. At such low values, core size is small and microbend loss tends to be large, and fiber characteristics are more sensitive to manufacturing variations.

Curves 42 and 44 are representative of waveguide dispersion characteristics of fibers having core index profiles of the type illustrated in Figure 2, the parameters of the index depression being different. In the fiber characterized by curve 42, $a_i$=0.6a, $a_o$=0.9a and the ratio

$$(n_1 - n_2)/(n_1 - n_3) = 0.75.$$

In the fiber characterized by curve 44, $a_i$=0.4a, $a_o$=0.65a and the ratio

$$(n_1 - n_2)/(n_1 - n_3) = 0.75.$$

Thus, the fibers characterized by curves 42 and 44 differ only in the radial position and the width of the core index depression.

Curve 42 crosses the x-axis at a value of $V/V_c$ close to but less than one. This is indicative of the fact that a fiber having such characteristics could be advantageously operated at a wavelength at or just above the zero material dispersion wavelength, said operating wavelength being near the single-mode cutoff wavelength. The steep slope of curve 42 suggests that the $D_w$ v. $\lambda$ curve will also exhibit a relatively large positive slope, a characteristic which gives rise to broad-banded, low dispersion operation.

Curve 44 is representative of a fiber which is capable of supplying a relatively large amount of waveguide dispersion while operating near the single-mode cutoff wavelength. Since material dispersion is relatively high at wavelengths greater than the OH-absorption peak at about 1400 nm, the fiber characterized by curve 44 would be able to supply the waveguide dispersion needed to balance out the material dispersion at wavelengths greater than 1400 nm.

Curve 46 is representative of a fiber having an $\alpha$=1 core index profile. Although this fiber is capable of operating at values of $V/V_c$ near 1.0, it is not capable of balancing out as much material dispersion as the fiber represented by curve 44, assuming operation at the same V-value.

Referring momentarily to Figure 5, curve 50 represents the material dispersion of an optical waveguide fiber having a core, the inner and outer regions of which are formed of silica doped with about 3 mole percent $GeO_2$, a depression formed of silica doped with about 1.7 mole percent fluorine and a depressed index cladding formed of silica doped with about 1.0 mole percent fluorine. Curve 50' is for a similar fiber except that the inner and outer core regions are formed of silica doped with about 8 mole percent $GeO_2$. Knowing the shape and zero crossover point of the material dispersion curve, one could choose a particular core index profile from among the various curves of Figure 4 to achieve low dispersion operation at a particular wavelength in the manner described above. For example, if it were desired to operate at a system wavelength of 1300 nm, i.e., for a design with a cutoff wavelength $\lambda_c$ of about 1250 nm, the waveguide dispersion would have to be as small as possible at that wavelength since the material dispersion is very small at 1300 nm. For single mode operation near 1300 nm the quantity $Vd^2(Vb)/dV^2$ has to be small for values of $V/V_c$ near 1.0. Curve 42 which represents one of the possible core index depression designs of the present invention, passes through zero at a $V/V_c$ value of 0.91. This indicates that such a design would be sutiable for balancing out the waveguide dispersion at 1300 nm.

Figure 5 illustrates why the core index depression design characterized by curve 42 of Figure 4 is advantageous for system wavelengths around 1300 nm. For low dispersion operation over a wide range of wavelengths, the waveguide dispersion curve should have a zero dispersion intercept at a wavelength near that of the material dispersion curve 50. By appropriately selecting the core index depression characteristics and the fiber $\Delta$-value, the material dispersion can be substantially balanced out over a wide range of wavelengths.

Curves 52 and 54 of Figure 5 are dispersion curves of optical waveguide fibers having a core index design characterized by curve 42 of Figure 4. The fiber cladding is assumed to be silica, and the values of $\Delta$ for curves 52 and 54 are 0.75% and 0.97%, respectively. The material dispersion is zero at about 1300 nm. The point of zero waveguide dispersion can also be made to occur at 1300 nm by appropriately selecting the V-value of the fiber. Curves 52 and 54 have relatively steep slopes which are useful for balancing out material dispersion over very large bands of wavelengths.

Curve 56 is dispersion curve of another fiber having a core index design characterized by curve 42 of Figure 4, wherein $\Delta$ is 0.5%. As described in greater detail hereinbelow, this fiber exhibits a zero dispersion wavelength of 1305 nm and a cutoff wavelength of 1120 nm. Since the slope of curve 56 is not as great as that of curve 54, the fiber characterized by curve 56 cannot provide low dispersion operation over as wide a band of wavelengths.

Curves 58 and 60, which represent the waveguide dispersion of fibers having an $\alpha$=1 profile, are included for comparison purposes. The $\Delta$-values of the fibers represented by curves 58 and 60 are 1.0% and 1.3%, respectively. It can be seen that the zero dispersion intercept of the waveguide dispersion curve will occur at about 1300 nm for this type of fiber only when $\Delta$ is made unacceptably low.

In Figure 6 curves 64 and 64', which duplicate material dispersion curves 50 and 50' of Figure 5, illustrate the fact that large waveguide dispersion is needed for zero dispersion operation at a wavelength of about 1500 nm or longer. Curves 70 and 72 repre-

sent fibers having an $\alpha$=1 index profile and $\Delta$-values of 1.0% and 1.3%, respectively. Curves 66 and 68 are for fibers characterized by curve 44 of Figure 4 and having $\Delta$-values of 0.75% and 0.97%, respectively. The fiber corresponding to curve 66 would provide zero dispersion operation at about 1550 nm.

The graphs of Figures 4-6 can be generated in a number of ways by those skilled in the art. Wave equations can be solved for a given fiber refractive index profile in accordance with the techniques advanced in the publications: C. Yeh et al. "Computing the Propagation Characteristics of Radially Stratified Fibers: an Efficient Method", Applied Optics, Vol. 16, 1977, pp. 483-493 and L. G. Cohen et al. "Correlation Between Numeral Predictions and Measurements of Single-Mode Fiber Dispersion Characteristics", Applied Optics, Vol. 19, 1980, pp. 2007-2010. Alternatively, the fibers can be fabricated and the dispersion measured in accordance with techniques advanced in the publications: L. G. Cohen et al. "A Universal Fiber Optic (UFO) Measurement System Based on a Near IR Fiber Raman Laser", IEEE Journal of Quantum Mechanics, Vol. QE-14, 1978, p. 855 and C. Lin et al. "Pulse Delay Measurements in the Zero-Material Dispersion Region for Germanium and Phosphorus Doped Silica Fibers", Electronics Letters, Vol. 14, 1978, pp. 170-172.

Optical waveguide fibers having core index profiles in accordance with the present invention can be fabricated by conventional vapor deposition processes. A theoretical example will be given to illustrate a method of fabrication of a fiber designed for operation at 1315 nm. A process such as that disclosed in U.S. Patent No. 4,217,027 can be employed. Reference is made to Figures 1 and 2 for a description of the various layers deposited in the formation of the preform, it being noted that Figure 1 is a cross-sectional view of the resultant fiber. A fused silica tube is employed as the substrate tube which forms outer cladding layer 18. Layer 18 may function as the cladding layer of index $n_2$, but it is preferred that a layer 16 of refractive index $n_2$ depressed below that of cladding layer 18 be employed so that less dopant concentration is required in the core to achieve a given value of $\Delta$. This results in a lower material dispersion, thus making it easier to achieve a value of $\lambda_o$ that is equal to or less than about 1315 nm. Layer 16 can comprise silica doped with about 1 mole percent fluorine. Up to 1.0 mole percent $P_2O_5$ may be added to layer 16 to lower the softening point temperature of that layer, thereby improving process convenience. Outer core region 12 is formed by depositing a layer of silica doped with about 3 mole percent $GeO_2$ on the inner surface of layer 16. Index depression layer 14 is formed by depositing a layer of silica doped with about 1.7 mole percent fluorine. Finally, the central core region 10 is formed by depositing another layer of silica doped with about 3 mole percent $GeO_2$.

The preform is collapsed and drawn into an optical waveguide fiber having the following characteristics. The radius of core 12 is 6.2 μm. Region 14 of depressed refractive index has an outer diameter of 5.6 μm and an inner diameter of 3.6 μm. Region 16 of depressed index cladding material should have a radius about 15 μm. Refractive indices $n_1$, $n_2$ and $n_3$ are 1.463, 1.456 and 1.4508, respectively. The cutoff value $V_c$ of the normalized frequency is about 5.0, and the cutoff wavelength $\lambda_c$ is about 1115 nm. The relative refractive index difference $\Delta$ is 0.3%. The spot size $w_o$ is about 3.7 μm. The waveguide dispersion characteristic of this fiber is represented by curve 56 of Figure 5. It is noted that the core radius of 6.2 μm is almost twice the core radius of a comparable step index fiber having no index depression within the core.

Another theoretical example will be given to illustrate a method of fabrication of a fiber designed for low dispersion operation over a broader wavelength range between about 1300 nm and 1550 nm. A process similar to that of the previously described example can be employed. A fused silica tube is employed as the substrate tube which forms outer cladding layer 18. Layer 16 can comprise silica doped with about 1 mole percent fluorine. Outer score region 12 is formed by depositing a layer of silica doped with about 4.5 mole percent $GeO_2$ on the inner surface of layer 16. Index depression layer 14 is formed by depositing a layer of silica doped with about 2.6 mole percent fluorine. Finally, the central core region 10 is formed by depositing another layer of silica doped with about 4.5 mole percent $GeO_2$.

The preform is collapsed and drawn into an optical waveguide fiber having the following characteristics. The radius of core 12 is about 6.7 μm. Region 14 of depressed refractive index has an outer diameter of about 5.5 μm and an inner diameter of about 3.3 μm. Region 16 of depressed index cladding material should have a radius greater than about 15 μm. Refractive indices $n_1$, $n_2$ and $n_3$ are 1.465, 1.456 and 1.447, respectively. The cutoff value $V_c$ of the normalized frequency is about 5.0, and the cutoff wavelength $\lambda_c$ is about 1115 nm. The relative refractive index difference $\Delta$ is 0.5%. The spot size $w_o$ is about 5 μm. The waveguide dispersion characteristic of this fiber is similar to curve 54 of Figure 5. It is noted that the core radius of 6.7 μm is almost twice the core radius of a comparable step index fiber having no index depression within the core.

Whereas the refractive index profiles illustrated in Figures 2 and 3 have a single region of depressed refractive index in the core, the present invention contemplates fiber cores having two or more regions of depressed refractive index. Figures 7 through 10 are illustrative of such fibers.

As shown in Figure 7 the core regions 75a and 75b are separated by depressed index region 76, and

core regions 75b and 75c are separated by depressed index region 77. The cladding may have a depressed refractive index as illustrated by solid line 78 or a non-depressed refractive index as illustrated by dashed line 79. The refractive indices of the depressions can be greater than that of the cladding as illustrated by the solid lines 76 and 77, or they may be lower than that of the cladding as illustrated by dashed lines 80 and 81.

Figure 8 shows a refractive index profile similar to that of Figure 7 and is further illustrative of the fact that each of the core regions 82a, 82b and 82c may have a different refractive index value and that the refractive indices of depressed index regions 83 and 84 and regions 85 and 86 may be different.

Figure 9 illustrates the fact that the refractive index peaks and depressions may be rounded, and indeed, the refractive index curve 88 of the core may vary sinusoidally (with sin/cos type of index variations). The index profiles for the design in Figure 9 can be represented by the following expression:

$$n(r) = \frac{(n_o + n_d)}{2} - \frac{(n_o - n_d)}{2}$$

$$\sin[m\pi(r/a) + \emptyset]r<a = n_{clad}r \geqq a$$

In the above expression, m represents the number of oscillations the index profile undergoes and $\emptyset$ is the phase lag parameter. For $\emptyset$=90°, the distribution is co-sinsoidal. The variables in this design that can be used to change the propagation characteristics are m, $\emptyset$ and $n_d$ in addition to $n_1$, $n_{clad}$ and a.

Calculations have shown that for m>10, the index variations are too rapid for the mode to follow. The mode effectively sees only an average index. But in the case where the core radial propagation constant U, which is defined by $(V^2-\beta^2)^{1/2}$, matches the periodicity of the sinusoidal perturbations, it is possible for resonances to take place. At these points, the propagation characteristics can drastically change. For this condition U is approximately equal to $\pi$m/a. At these points, the propagation constant, the dispersion etc. can be quite different from the conventional case. This property may be used to design single-mode waveguides with the required dispersion properties.

Figure 10 shows that the sinusoidal variation 90 may decrease with increased radius along some average value represented by dashed line 91. Alternatively, the variations in the core refractive index may oscillate about some average value that increases with radius as represented by dashed line 92.

It can be seen that additional variables are available in the embodiments of Figures 7 through 10 as compared with the embodiments of Figures 2 and 3. Thus, it may be possible to achieve better optimization of the loss and dispersion properties of the fiber over a wide range of wavelengths when the fiber core possesses more than one index depression.

**Claims**

1. An optical waveguide fiber comprising a core of transparent material having a maxiumum refractive index $n_1$ and a radius a, and a layer of transparent cladding material on the outer surface of said core, the refractive index $n_2$ of said cladding being less than $n_1$, said core comprising a central portion (75a, 82a) surrounded by at least two concentric segments (75b,75c; 82b,82c) said central portion (75a;82a) and the innermost (75b;82b) of said concentric segments being separated by a region of depressed refractive index (76,80; 83,85) and each two adjacent segments being separated by a region of depressed refractive index (77,81; 84,86), the inner radius $a_1$ of the innermost (76,80; 83,85) of said regions of depressed refractive index being greater than zero and the maximum radius $a_0$ of the outermost (77,81; 84,86) of said regions of depressed refractive index being less than a, characterized in that the refractive indices of said segments and said regions and the radii thereof are such that the fiber propagates a single single-mode signal at at least one wavelength at which the fiber is suitable for use as a long distance transmission line.

2. An optical waveguide fiber in accordance with claim 1, wherein said cladding comprises a region of depressed refractive index (78) adjacent the outer surface of said core.

3. An optical waveguide in accordance with claim 1 or 2, wherein the maximum refractive index of said central portion (75a) and of each of said segments (75b, 75c) is the same.

4. An optical waveguide in accordance with claim 1 or 2, wherein the maximum refractive indices of said central portion (82a) and of said segments (82b, 82c) are not all the same.

5. An optical waveguide in accordance with claim 1, wherein the refractive indices of said regions (76, 77; 80, 81) of depressed refractive index are the same.

6. An optical waveguide in accordance with claim 1, wherein the refractive indices of said regions (83, 84, 85, 86) of depressed refractive index are not the same.

7. An optical waveguide in accordance with claim 1, wherein the composite refractive index of said central portion, said segments and said annular regions of depressed refractive index amounts to a sinusoidal refractive index variation (88).

**8.** An optical waveguide in accordance with claim 7, wherein said sinusoidal composite refractive index variation (90) of said core is superimposed on a radially decreasing base value (91).

**9.** An optical waveguide in accordance with claim 7, wherein said sinusoidal composite refractive index variation (90) of said core is superimposed on a radially increasing base value (92).

## Patentansprüche

**1.** Optische Wellenleiterfaser mit einem Kern aus einem transparenten Material, das einen maximalen Brechungsindex $n_1$ und einen Radius a besitzt, und mit einer Schicht aus transparentem Mantelmaterial auf der äußeren Oberfläche des Kerns, wobei der Brechungsindex $n_2$ des Mantels kleiner ist als $n_1$, wobei der Kern einen zentralen Abschnitt (75a, 82a) aufweist, der von wenigstens zwei konzentrischen Segmenten (75b, 75c; 82b, 82c) umgeben ist, wobei der zentrale Abschnitt (75a; 82a) und das innerste (75b; 82b) der konzentrischen Segmente durch einen Bereich mit abgesenktem Bre- chungsindex (76, 80; 83, 85) getrennt sind, und wobei jeweils zwei benachbarte Segmente durch einen Bereich mit abgesenktem Brechungsindex (77, 81; 84, 86) getrennt sind, wobei der innere Radius $a_1$ des innersten (76, 80; 83, 85) der Bereiche mit abgesenktem Brechungsindex größer als Null und der maximale Radius $a_0$ des äußersten (77, 81; 84, 86) der Bereiche mit abgesenktem Brechungsindex kleiner als a ist,
**dadurch gekennzeichnet**,
daß die Brechungsindices der Segmente und der Bereiche und deren Radien derart bemessen sind, daß die Faser ein einziges Monomodesignal bei wenigstens einer Wellenlänge leitet, bei der die Faser zur Verwendung bei einer Fernübertragungsleitung geeignet ist.

**2.** Optische Wellenleiterfaser nach Anspruch 1, bei der der Mantel einen Bereich mit abgesenktem Brechungsindex (78) nahe der Außenfläche des Kerns aufweist.

**3.** Optischer Wellenleiter nach Anspruch 1 oder 2, bei dem der maximale Brechungsindex des zentralen Abschnitts (50a) und der jedes der Segmente (50b, 50c) derselbe ist.

**4.** Optischer Wellenleiter nach Anspruch 1 oder 2, bei dem die maximalen Brechungsindices des mittleren Abschnitts (92a) und der Segmente (92b, 92c) nicht dieselben sind.

**5.** Optischer Wellenleiter nach Anspruch 1, bei dem die Brechungsindices der Bereiche (76, 77; 80, 81) mit abgesenktem Brechungsindex dieselben sind.

**6.** Optischer Wellenleiter nach Anspruch 1, bei dem die Brechungsindeces der Bereiche (83, 84, 85, 86) mit abgesenktem Brechungsindex nicht dieselben sind.

**7.** Optischer Wellenleiter nach Anspruch 1, bei dem der zusammengesetzte Brechungsindex des zentralen Abschnitts, der Segmente und der ringförmigen Bereiche mit abgesenktem Brechungsindex eine sinusförmige Brechungsindexänderung ergibt.

**8.** Optischer Wellenleiter nach Anspruch 7, bei dem die sinusförmige zusammengesetzte Brechungsindexvariation (90) des Kerns einem radial abnehmenden Grundwert (91) überlagert ist.

**9.** Optischer Wellenleiter nach Anspruch 7, bei dem die sinusförmige zusammengesetzte Brechungsindexvariation (90) des Kerns einem radial zunehmenden Grundwert (92) überlagert ist.

## Revendications

**1.** Fibre optique guide d'ondes, comprenant une âme en matière transparente ayant un indice de réfraction $n_1$ maximal et de rayon a, et une couche de matière d'enveloppe transparente placée sur la surface extérieure de ladite âme, et ayant un indice de réfraction $n_2$ inférieur à $n_1$,
ladite âme comprenant une partie centrale (75a, 82a) entourée par au moins deux segments concentriques (75b, 75c ; 82b, 82c), ladite partie centrale (75a, 82a) et le plus interne (75b ; 82b) desdits segments concentriques étant séparés par une région d'indice de réfraction plus faible (76, 80 ; 83, 85), et deux segments adjacents étant séparés chaque fois par une région d'indice de réfraction plus faible (77, 81 ; 84, 86), le rayon intérieur $a_i$ de la plus interne (76, 80 ; 83, 85) de ces régions à indice plus faible étant non nul, et le rayon maximal $a_o$ de la plus externe (77, 81 ; 84, 86 de ces régions à indice plus faible étant inférieur à a, caractérisée en ce que les indices de réfraction desdits segments et desdites régions, et leurs rayons, sont tels que la fibre propage un unique signal monomode à au moins une longueur d'onde à laquelle la fibre est utilisable comme ligne de transmission à grande distance.

**2.** Fibre optique selon la revendication 1, caractérisée en ce que l'enveloppe comprend une région

(78) à indice de réfraction plus faible, adjacente à la surface extérieure de l'âme.

**3.** Fibre optique selon la revendication 1 ou 2, caractérisée en ce que l'indice de réfraction maximal de ladite partie centrale (75a) est le même que celui de chacun desdits segments (75b, 75c).

**4.** Fibre optique selon la revendication 1 ou 2, caractérisée en ce que l'indice de réfraction maximal de ladite partie centrale (75a) et celui desdits segments ne sont pas tous les mêmes.

**5.** Fibre optique selon la revendication 1, caractérisée en ce que les indices de réfraction desdites régions (76, 77 ; 80, 81) d'indice plus faible sont les mêmes.

**6.** Fibre optique selon la revendication 1, caractérisée en ce que les indices de réfraction desdites régions (76, 77, 80, 81) d'indice plus faible ne sont pas les mêmes.

**7.** Fibre optique selon la revendication 1, caractérisée en ce que l'indice de réfraction composite de ladite partie centrale, lesdits segments et lesdites régions à indice plus bas présentent une variation sinusoïdale.

**8.** Fibre optique selon la revendication 7, caractérisée en ce que ladite variation sinusoïdale (90) de l'indice de réfraction de l'âme se superpose à une base décroissant radialement (91).

**9.** Fibre optique selon la revendication 7, caractérisée en ce que ladite variation sinusoïdale (90) de l'indice de réfraction de l'âme se superpose à une base croissant radialement (92).

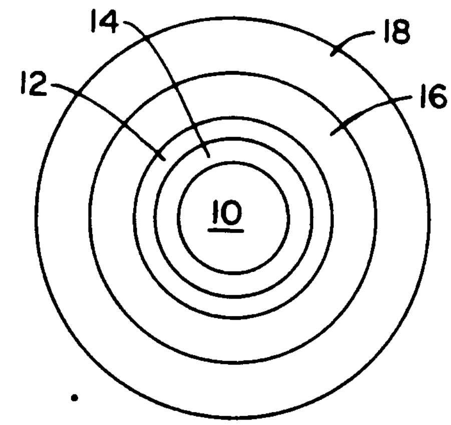


Fig. 1

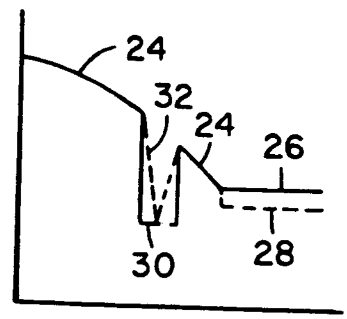


Fig. 3

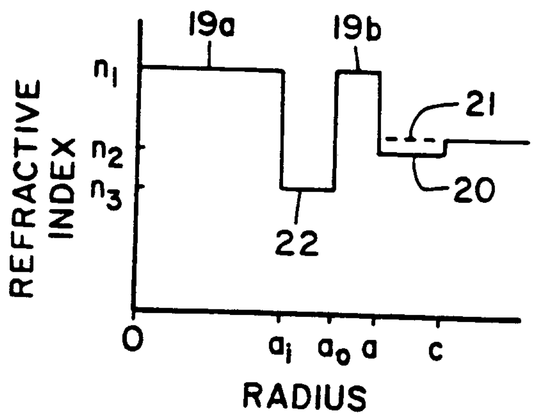


Fig. 2

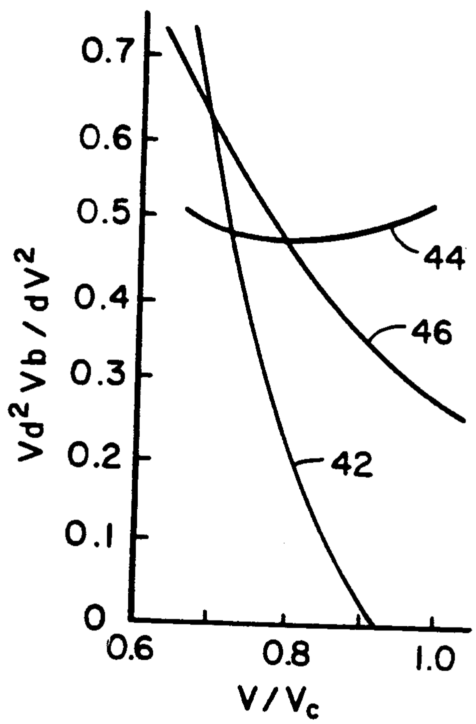


Fig. 4

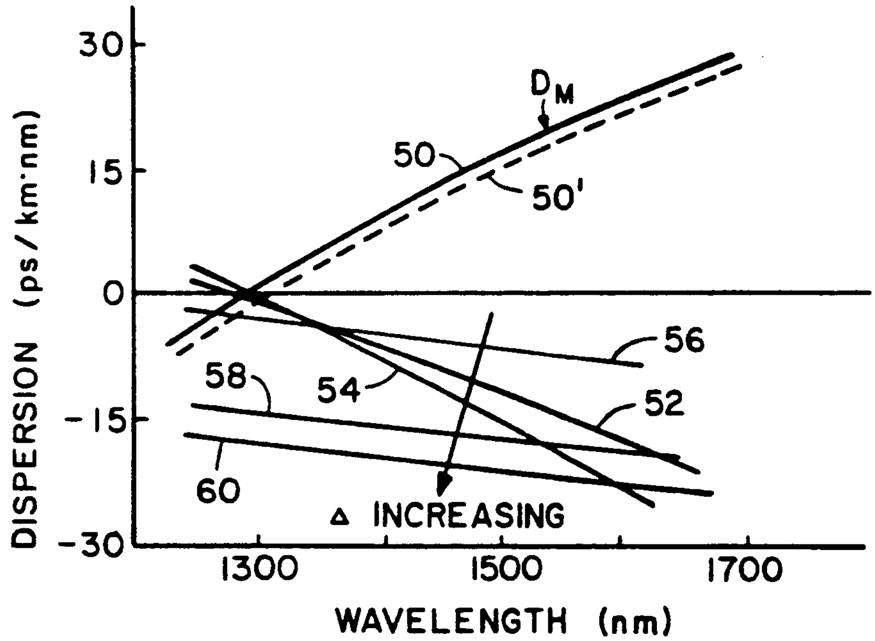
30
15
0
-15
-30
DISPERSION (ps/km·nm)
D_M
50
50'
56
58
54
52
60
Δ INCREASING
1300
1500
1700
WAVELENGTH (nm)

*Fig. 5*

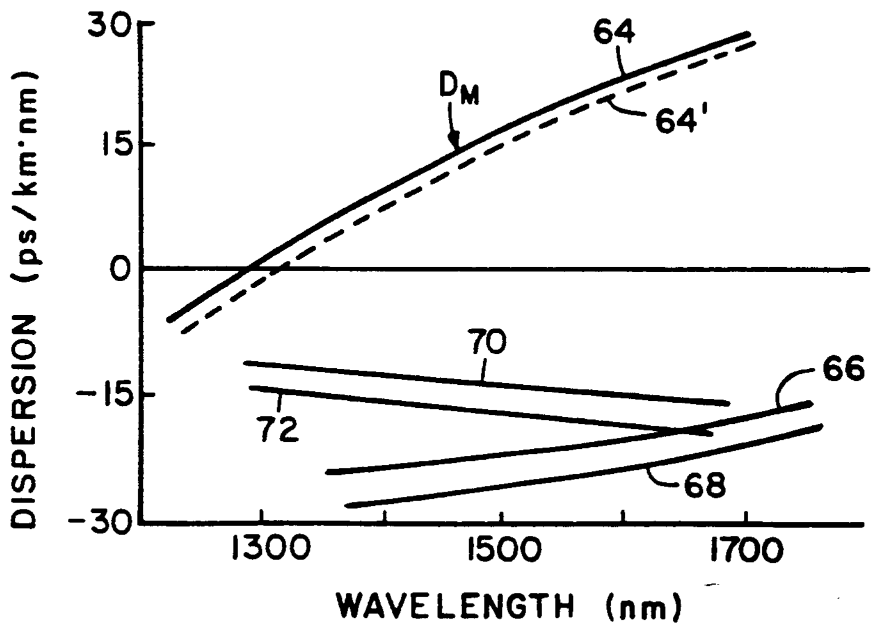
30
15
0
-15
-30
DISPERSION (ps/km·nm)
64
D_M
64'
70
66
72
68
1300
1500
1700
WAVELENGTH (nm)

*Fig. 6*

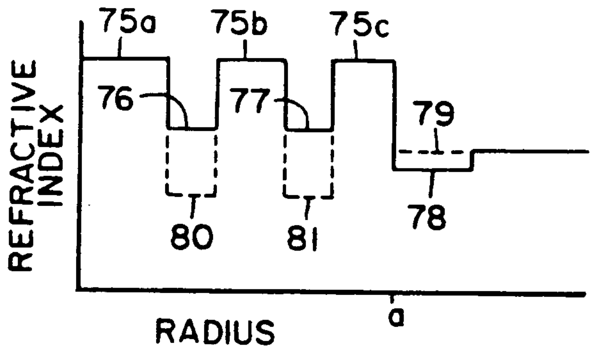


Fig. 7

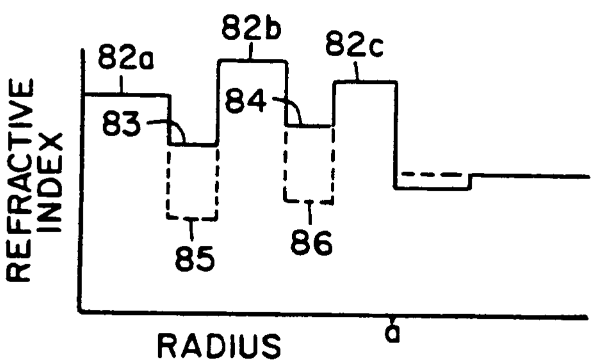


Fig. 8

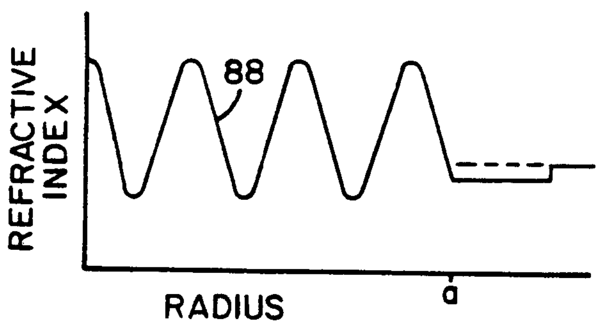


Fig. 9

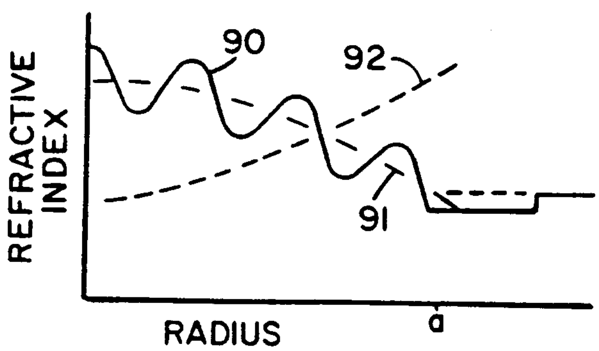


Fig. 10